# EUROPEAN PATENT APPLICATION

(11) **EP 4 628 461 A1**
(43) Date of publication of application: **08.10.2025**
(21) Application number: 24182089.3
(22) Date of filing: 13.06.2024
(51) Int. Cl.: C03C 25/106, C08G 73/10, C08L 79/08, C09D 179/08, G02B 6/02

(54) **POLY(AMIC ACID) SLURRY FOR OPTICAL FIBERS, PREPARATION METHOD THEREFOR, AND APPLICATION THEREOF**

(30) Priority: 02.04.2024 CN 202410396542
(71) Applicant: Ningbo Boya Poly Advanced Materials Co., Ltd., Ningbo Zhejiang 315000 (CN)
(72) Inventor: ZHANG, Pengfei, Ningbo, 315000 (CN); ZHUANG, Fangdong, Ningbo, 315000 (CN)
(74) Representative: Müller-Boré & Partner Patentanwälte PartG mbB

(57) **Abstract**

Provided are a poly(amic acid) slurry for optical fibers, a preparation method therefor, and an application thereof. The raw materials for preparing the poly(amic acid) slurry for optical fibers comprise aromatic diamine, aromatic dianhydride, an ester functional monomer, an organic solvent, and a coupling agent; the ester functional monomer comprises an ester containing two amino groups and/or an ester containing two anhydride groups; by adding the above specific ester functional monomer into the preparation raw materials, and synergistically adding the coupling agent, the polyimide coating which is formed by coating the poly(amic acid) slurry around the bare optical fiber has good adhesion, flexibility, heat resistance, and tensile properties, which can effectively protect the optical fiber; meanwhile, the polyimide coating has excellent chemical strippability, which can be quickly dissolved or dissolved-to-break after soaked in a chemical reagent, and thereby can be effectively stripped from the substrate without damaging the substrate, which is convenient for the connection and use of optical fibers.

## Description

### TECHNICAL FIELD

The present application belongs to the field of coating technology, and specifically, relates to a poly(amic acid) slurry for optical fibers, a preparation method therefor, and an application thereof.

### BACKGROUND

Because the conduction loss of light in optical fibers is much lower than that of electricity in wire conduction, optical fibers are used for long-distance information transmission. Optical fibers, made of glass or plastic, are suitable for mass data transmission and interference-free data transmission in the field of telecommunications, and are completely insensitive to the electric field or magnetic field in data transmission. In order to improve the strength and flexibility of the optical fibers, a protective layer is usually coated on the outer layer of the optical fibers, in which the material of the protective layer is mainly polymethyl methacrylate (PMMA), the glass transition temperature of the conventional PMMA is generally about 100 °C, and the glass transition temperature of the modified PMMA is not exceed 150 °C. Due to the working conditions, the signal transmission is required to be realized in a high-temperature environment (more than 250 °C), such as the signal transmission of sensor of aerospace vehicles, and the signal transmission of oil mine exploration.

The coating of the protective layer on the outer layer of the optical fibers is mainly used to protect the internal optical fiber, and in the actual use process; the protective layer on the joint part is required to be stripped off before use. The conventional stripping schemes include physical stripping and chemical stripping, in which the physical stripping can effectively remove the protective layer, but it is easy to damage the optical fiber layer, while the chemical stripping mainly involves immersing the optical fibers into a chemical reagent for soaking to make it soften, dissolve, or decompose, which is not only efficient but also unharmful to the optical fiber layer.

CN1222897A discloses a preparation method for a coated optical fiber with a strippable polyimide coating, which comprises the following steps: pulling the optical fiber through a curable poly(amic acid) solution to form a coating on the fiber and curing the coated fiber, and then stripping the cured coating from the optical fiber by exposing the cured coating to a polar organic solvent such as acetone; this invention also provides a fiber with a strippable polyimide coating. This method is particularly suitable for heavy metal fluorinated fibers, and chalcogenide fibers that transmit light signals in the infrared region. This method can effectively strip off the protective layer, but in the actual use, it is found that the adhesive force between the fluorine-containing coating and the optical fiber is low, and the corroded joint is easy to be separated in the future, which reduces the protection degree of the optical fiber.

Therefore, in view of the above technical problems, it is urgent to develop a poly(amic acid) slurry for optical fibers providing chemical strippability, excellent heat resistance and high adhesive force.

### SUMMARY

In view of the shortcomings of the prior art, a purpose of the present application is to provide a poly(amic acid) slurry for optical fibers, a preparation method therefor, and an application thereof, wherein the polyimide coating formed by coating the poly(amic acid) slurry around a bare optical fiber has good adhesion, flexibility, heat resistance, and tensile properties, can effectively protect the optical fiber, and has excellent chemical strippability at the same time, which is convenient for the connection and use of the optical fibers.

To achieve this purpose, the present application adopts the following technical solutions.

In a first aspect, the present application provides a poly(amic acid) slurry for optical fibers, and raw materials for preparing the poly(amic acid) slurry for optical fibers comprise aromatic diamine, aromatic dianhydride, an ester functional monomer, an organic solvent, and a coupling agent;
the ester functional monomer comprises an ester containing two amino groups and/or an ester containing two anhydride groups.

The raw materials for preparing the poly(amic acid) slurry for optical fibers provided in the present application comprise aromatic diamine, aromatic dianhydride, an ester functional monomer, an organic solvent, and a coupling agent, and limit the ester functional monomer to comprise an ester containing two amino groups and/or an ester containing two anhydride groups; by adding the above specific ester functional monomer into the preparation raw materials, and synergistically adding the coupling agent, the polyimide coating that is formed by high-temperature imidization after the obtained poly(amic acid) slurry is coated around the bare optical fiber has good adhesion, flexibility, heat resistance, and tensile properties, and can effectively protect the optical fiber, allowing the optical fiber to work stably for at least 3000 h at 250 °C. Meanwhile, the polyimide coating has excellent chemical strippability, it can be quickly dissolved or dissolved-to-break after soaking in a chemical reagent (such as sulfuric acid), and thereby can be effectively stripped from the substrate without damaging the substrate, which is convenient for the connection and use of optical fibers.

Preferably, in the raw materials for preparing the poly(amic acid) slurry for optical fibers, a mass percentage content of the aromatic diamine and the aromatic dianhydride is 18-32%, such as 20%, 22%, 24%, 26%, 28%, or 30%, and further preferably, 19-30%.

As a preferred technical solution of the present application, in the raw materials for preparing the poly(amic acid) slurry for optical fibers, the mass percentage content of the aromatic diamine and the aromatic dianhydride is limited to 18-32%, so that the obtained poly(amic acid) slurry for optical fibers has excellent processability together with excellent mechanical properties; in one aspect, if the mass percentage content of the aromatic diamine and the aromatic dianhydride is too low, the viscosity of the poly(amic acid) slurry for optical fibers will be too low, and thus more times of coating procedures are required to be performed, and the final formed polyimide coatings after the high-temperature imidization will have a reduced strength; in another aspect, if the mass percentage content of the aromatic diamine and the aromatic dianhydride is too high, the viscosity of the poly(amic acid) slurry for optical fibers will be too high, which is not conducive to coating.

Preferably, in the raw materials for preparing the poly(amic acid) slurry for optical fibers, a molar ratio of anhydride groups to amino groups is 1:(0.95-1.05), such as 1:0.96, 1:0.97, 1:0.98, 1:0.99, 1:1, 1:1.01, 1:1.02, 1:1.03, or 1:1.04.

Preferably, the aromatic diamine comprises any one or a combination of at least two of p-phenylenediamine, m-phenylenediamine, 4,4'-diaminodiphenyl ether, 2,2'-bis(trifluoromethyl) diaminobiphenyl, 4,4'-diaminobenzanilide, 2,2'-bis[4-(4-aminophenoxyphenyl)]propane, 4,4'-diaminodiphenylsulfone, 2-(4-aminophenyl)-5-aminobenzimidazole, 2,2-bis(4-hydroxy-3-aminophenyl)propane, 4,4'-bis(3-aminophenoxy)diphenylsulfone, 4,4'-diamino-2,2'-dimethyl-1,1'-biphenyl, 4,4'-diamino-biphenyl, or 9,9-bis(4-aminophenyl)fluorene.

Preferably, the aromatic dianhydride comprises aromatic tetracarboxylic acid dianhydride.

Preferably, the aromatic tetracarboxylic acid dianhydride comprises any one or a combination of at least two of 2,2',3,3'-biphenyl tetracarboxylic dianhydride, 3,3',4,4'-biphenyl tetracarboxylic dianhydride, 4,4'-oxydiphthalic anhydride, 9,9-bis(3,4-dicarboxyphenyl)fluorene dianhydride, 1,3-dioxo-1,3-dihydroisobenzofuran-5-yl 1,3-dioxo-1,3-dihydroisobenzofuran-5-carboxylate, bis[(3,4-dicarboxylic anhydride)phenyl] terephthalate, 3,3',4,4'-diphenylsulfone tetracarboxylic dianhydride, 1,4-phenylene bis(1,3-dioxo-1,3-dihydroisobenzofuran-5-carboxylate), 4,4'-(p-phenylenedioxy)bis(phthalic anhydride), pyromellitic dianhydride, 2,2-bis(3,4-dicarboxyphenyl)hexafluoropropane dianhydride, 2,2-bis(4-(3,4-dicarboxyphenoxy) phenyl)hexafluoropropane dianhydride, 2,2-bis(4-(3,4-dicarboxybenzoyloxy)phenyl) hexafluoropropane dianhydride, or 2,2'-bis(trifluoromethyl)-4,4'-bis(3,4-dicarboxyphenoxy) diphenyl dianhydride.

Preferably, the ester functional monomer comprises an ester containing two amino groups, and a molar ratio of the ester containing two amino groups to the aromatic diamine is 1:(1-10), such as 1:2, 1:3, 1:4, 1:5, 1:6, 1:7, or 1:8; if the addition ratio of the ester containing two amino groups is too high, the high-temperature resistance of the poly(amic acid) slurry for optical fibers will reduce to a certain extent, which cannot meet the requirements of long-term use at high temperatures; if the addition ratio of the ester containing two amino groups is too low, the chemical stripping performance of the polyimide coating formed from the poly(amic acid) slurry for optical fibers by imidization will be reduced to a certain extent, and the chemical stripping will be not complete or the stripping time will be too long.

Preferably, the ester containing two amino groups has at least one of the following structures: 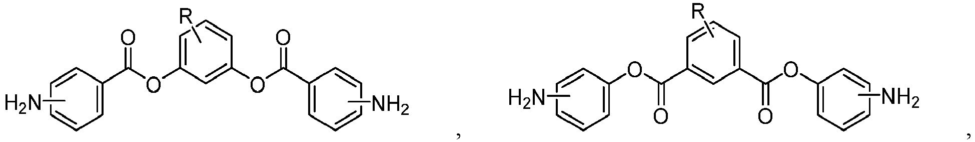 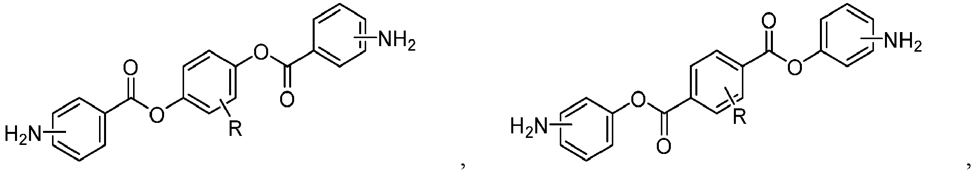 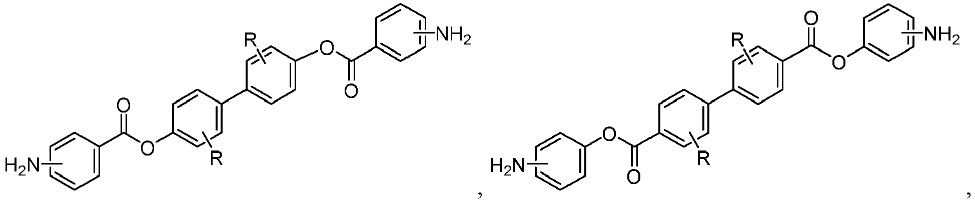 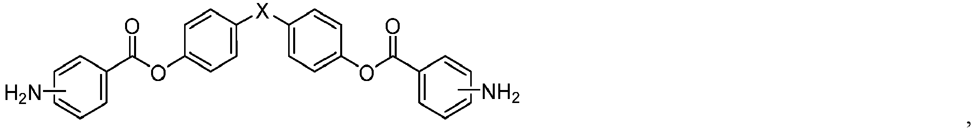 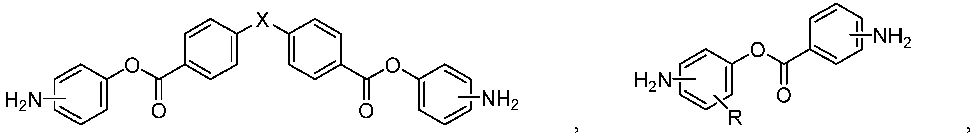 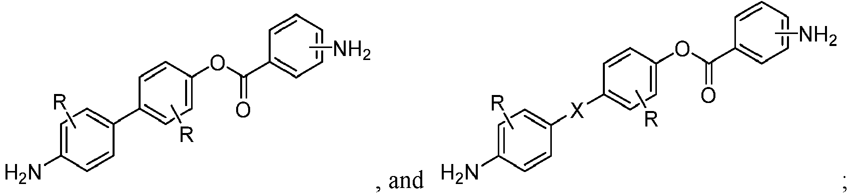 in the above structures, R is independently selected from any one of H, methyl, ethyl, or -CF₃, and X is independently selected from any one of -O-, -S-, or -SO₂-.

Preferably, the ester containing two amino groups comprises any one or a combination of at least two of [4-(4-aminobenzoyl)oxyphenyl] 4-aminobenzoate (ABHQ), bis(4-aminophenyl) terephthalate (BAPT), or 4-aminophenyl-4-aminobenzoate (APAB).

Preferably, the ester monomer comprises an ester containing two anhydride groups, and a molar ratio of the ester containing two anhydride groups to the aromatic dianhydride is 1:(1-10), such as 1:2, 1:3, 1:4, 1:5, 1:6, 1:7, or 1:8; if the addition ratio of the ester containing two anhydride groups is too high, the high-temperature resistance of the poly(amic acid) slurry for optical fibers will reduce to a certain extent, which cannot meet the requirements of long-term use at high temperature; if the addition ratio of the ester containing two anhydride groups is too low, the chemical stripping of the polyimide coating formed by the poly(amic acid) slurry will be not complete or the stripping time will be too long, and the chemical strippability will be decreased.

Preferably, the ester containing two anhydride groups has at least one of the following structures: 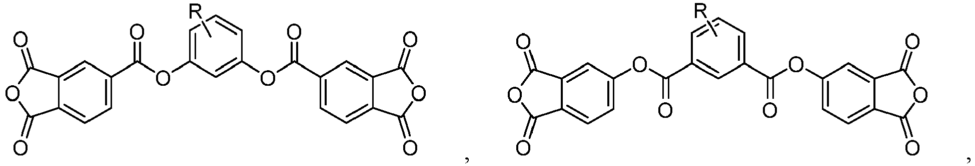 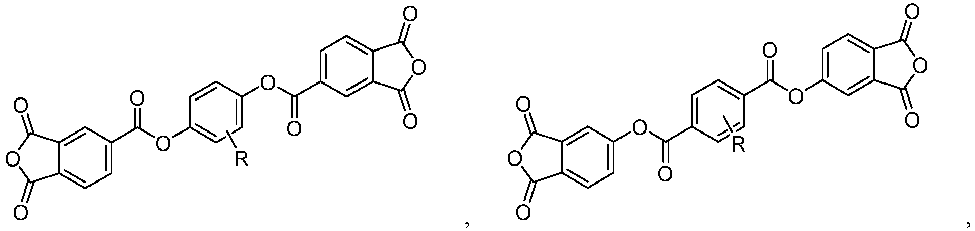 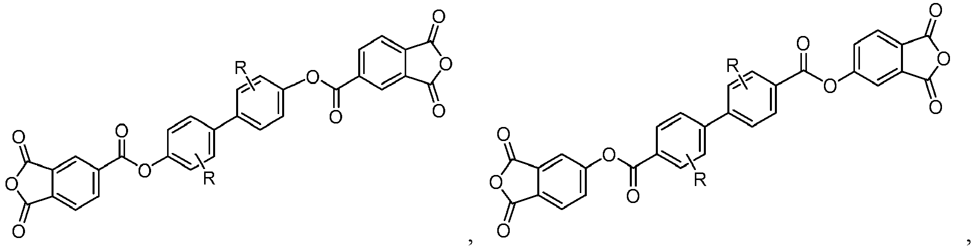 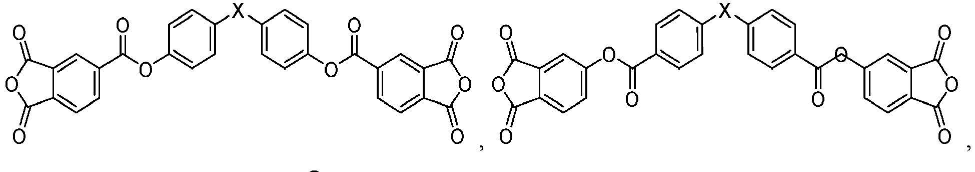 and 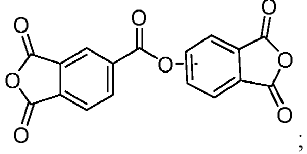 in the above structures, R is independently selected from any one of H, methyl, ethyl, or -CF₃, and X is independently selected from any one of -O-, -S-, - SO₂-, or methylene.

Preferably, the ester containing two anhydride groups comprises any one or a combination of at least two of phenylene bis(trimellitate anhydride) (TAHQ), bis[(3,4-dicarboxylic anhydride)phenyl] terephthalate (PHAP), or 1,3-dioxo-1,3-dihydroisobenzofuran-5-yl 1,3-dioxo-1,3-dihydroisobenzofuran-5-carboxylate (8CI).

Preferably, the organic solvent comprises an aprotic organic solvent, which is further preferably any one or a combination of at least two of N-methyl-2-pyrrolidone, N,N-dimethylformamide, N,N-dimethylacetamide, γ-butyrolactone, propylene glycol monomethyl ether, cyclopentanone, cyclohexanone, ethyl acetate, toluene, or methyl ethyl ketone, and further preferably, N,N-dimethylformamide and N,N-dimethylacetamide.

Preferably, the coupling agent comprises a silane coupling agent.

In the present application, there is no special requirement for the specific type of the silane coupling agent, the commercially available conventional silane coupling agent can be selected, and exemplarily, γ-aminopropyl triethoxysilane (KH550) can be selected.

Preferably, the raw materials for preparing the poly(amic acid) coating also comprise an end-capping agent.

Preferably, the end-capping agent comprises a monoamine compound or a monocarboxylic acid compound.

Preferably, a viscosity of the poly(amic acid) slurry is 3000-30000 cp (such as 5000, 7000, 9000, 13000, 15000, 19000, 21000, 25000, 27000, or 29000), and further preferably, 5000-15000 cp.

In a second aspect, the present application provides a preparation method for the poly(amic acid) slurry for optical fibers according to the first aspect, and the preparation method comprises: subjecting aromatic diamine, aromatic dianhydride, and an ester functional monomer to a copolymerization reaction in an organic solvent, and adding a coupling agent and mixing to obtain the poly(amic acid) slurry for optical fibers.

Preferably, the copolymerization reaction is performed at a temperature of 25-60 °C, such as 30 °C, 35 °C, 40 °C, 45 °C, 50 °C, or 55 °C, and further preferably, 35-55 °C.

Preferably, the copolymerization reaction is performed for a period of 3-24 h, such as 4 h, 5 h, 6 h, 7 h, 8 h, 10 h, 12 h, 14 h, 16 h, 18 h, 20 h, or 22 h.

Preferably, after the reaction is finished, the preparation method also comprises the step of adding an end-capping agent for an end-capping reaction.

In a third aspect, the present application provides a polyimide film, and the polyimide film is obtained by subjecting the poly(amic acid) slurry according to the first aspect to an imidization reaction.

Preferably, the imidization reaction is performed at a temperature of 60-400 °C, such as 100 °C, 150 °C, 200 °C, 250 °C, 300 °C, or 350 °C.

In a fourth aspect, the present application provides a polyimide optical fiber, and the polyimide optical fiber comprises a bare optical fiber and the polyimide film according to the third aspect that is coated around the bare optical fiber.

Compared with the prior art, the present application has the following beneficial effects.
(1) Raw materials for preparing the poly(amic acid) slurry for optical fibers provided in the present application comprise aromatic diamine, aromatic dianhydride, an ester functional monomer, an organic solvent, and a coupling agent, and the ester monomer comprises an ester containing two amino groups and/or an ester containing two anhydride groups; by adding the ester functional monomer into the preparation raw materials, and synergistically adding the coupling agent, the polyimide coating which is formed by subjecting the poly(amic acid) slurry for optical fibers to high-temperature imidization has good heat resistance, adhesion, and mechanical properties; meanwhile, the polyimide coating also has excellent chemical strippability, it can be quickly dissolved or dissolved-to-break after soaking in a chemical reagent, and thereby can be effectively stripped from the substrate without damaging the substrate, which is suitable for the protective coating of optical fibers.
(2) Specifically, for the polyimide film formed by the polyamic acid slurry for optical fibers provided in the present application, the tensile strength is as high as 146-179 MPa, the elongation at break is 59-76%, the adhesion is as high as 5 B, the Tg is 371-396 °C, and the dissolution time is only 2-4 min.

### DETAILED DESCRIPTION

The technical solutions of the present application are further described below in terms of embodiments. It should be understood by those skilled in the art that the examples are merely intended to assist in the understanding of the present application and should not be regarded as specific limitations of the present application.

Unless otherwise specified, in the embodiments of the present application, the raw materials involved are all conventional commercially available materials, and the instruments and equipment involved are all conventional instruments and equipment in the field.

In particular, test methods for the solid content and viscosity involved in the embodiments of the present application are as follows:
(1) viscosity: the viscosity of paint is measured at 25 °C by the American Brookfield cone-plate viscometer; and
(2) solid content: an aluminum foil tray with a diameter of 60 mm was taken and weighed recorded as m₀, a 1 ± 0.1 g of paint sample was taken and placed in the aluminum tray, the aluminum tray and the paint were weighed up (mi), the aluminum tray having the paint was placed in an air-blowing oven at 180 ± 5 °C, and taken out after 1 h, and the mass of the aluminum tray having the paint was weighed up (m₂); solid content = (m₂-m₀)/(m₁-m₀)×100%.

### Example 1

A poly(amic acid) slurry for optical fibers has a viscosity of 9672 cp and a solid content of 23.8%.

A preparation method for the poly(amic acid) slurry for optical fibers comprises: N,N-dimethylacetamide (DMAc, 608 g) was added to the a 1 L reaction kettle, and then 4,4'-diaminodiphenyl ether (ODA, 86.9 g, 0.43 mol) was added to the reaction kettle, and the reaction kettle was heated to 40 °C, added with pyromellitic dianhydride (PMDA, 85.19 g, 0.39 mol) and phenylene bis(trimellitate anhydride) (TAHQ, 19.89 g, 0.04 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Example 2

A poly(amic acid) slurry for optical fibers has a viscosity of 10465 cp and a solid content of 23.3%.

A preparation method for the poly(amic acid) slurry for optical fibers comprises: N,N-dimethylacetamide (DMAc, 608 g) was added to the a 1 L reaction kettle, and then 4,4'-diaminodiphenyl ether (ODA, 86.9 g, 0.43 mol) was added to the reaction kettle, and the reaction kettle was heated to 40 °C, added with pyromellitic dianhydride (PMDA, 85.19 g, 0.39 mol) and bis[(3,4-dicarboxylic anhydride)phenyl] terephthalate (PHAP, 0.04 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Example 3

A poly(amic acid) slurry for optical fibers has a viscosity of 11083 cp and a solid content of 23.1%.

A preparation method for the poly(amic acid) slurry for optical fibers comprises: N,N-dimethylacetamide (DMAc, 608 g) was added to the a 1 L reaction kettle, and then 4,4'-diaminodiphenyl ether (ODA, 89.3 g, 0.45 mol) was added to the reaction kettle, and the reaction kettle was heated to 40 °C, added with pyromellitic dianhydride (PMDA, 87.57 g, 0.4 mol) and 1,3-dioxo-1,3-dihydroisobenzofuran-5-yl 1,3-dioxo-1,3-dihydroisobenzofuran -5-carboxylate (8CI, 15.08 g, 0.05 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Example 4

A poly(amic acid) slurry for optical fibers has a viscosity of 8956 cp and a solid content of 19.7%.

A preparation method for the poly(amic acid) slurry for optical fibers comprises: N,N-dimethylacetamide (DMAc, 640 g) was added to the a 1 L reaction kettle, and then 4,4'-diaminodiphenyl ether (ODA, 66.5 g, 0.33 mol) and [4-(4-aminobenzoyl)oxyphenyl] 4-aminobenzoate (ABHQ, 12.86 g, 0.04 mol) were added to the reaction kettle, and the reaction kettle was heated to 40 °C, added with pyromellitic dianhydride (PMDA, 80.48 g, 0.37 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Example 5

A poly(amic acid) slurry for optical fibers has a viscosity of 9874 cp and a solid content of 19.5%.

A preparation method for the poly(amic acid) slurry for optical fibers comprises: N,N-dimethylacetamide (DMAc, 640 g) was added to the a 1 L reaction kettle, and then 4,4'-diaminodiphenyl ether (ODA, 66.5 g, 0.33 mol) and bis(4-aminophenyl) terephthalate (BAPT, 12.86 g, 0.04 mol) were added to the reaction kettle, and the reaction kettle was heated to 40 °C, added with pyromellitic dianhydride (PMDA, 80.48 g, 0.37 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Example 6

A poly(amic acid) slurry for optical fibers has a viscosity of 12401 cp and a solid content of 19.7%.

A preparation method for the poly(amic acid) slurry for optical fibers comprises: N,N-dimethylacetamide (DMAc, 640 g) was added to the a 1 L reaction kettle, and then 4,4'-diaminodiphenyl ether (ODA, 68.46 g, 0.34 mol) and 4-aminophenyl-4-aminobenzoate (APAB, 8.671 g, 0.04 mol) were added to the reaction kettle, and the reaction kettle was heated to 40 °C, added with pyromellitic dianhydride (PMDA, 82.86 g, 0.38 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Example 7

This example provides a poly(amic acid) slurry for optical fibers, which differs from Example 1 in that the additive amount of PMDA was 0.3 mol, the additive amount of TAHQ was 0.13 mol, and other substances, usage amounts, and preparation methods are the same as those in Example 1.

### Example 8

This example provides a poly(amic acid) slurry for optical fibers, which differs from Example 1 in that the additive amount of PMDA was 0.2 mol, the additive amount of TAHQ was 0.23 mol, and other substances, usage amounts, and preparation methods are the same as those in Example 1.

### Comparative Example 1

A poly(amic acid) slurry for optical fibers has a viscosity of 13655 cp and a solid content of 19.1%.

A preparation method for the poly(amic acid) slurry comprises: N,N-dimethylacetamide (DMAc, 640 g) was added to the a 1 L reaction kettle, and then 4,4'-diaminodiphenyl ether (ODA, 76.58 g, 0.38 mol) was added to the reaction kettle, and the reaction kettle was heated to 40 °C, added with pyromellitic dianhydride (PMDA, 83.42 g, 0.38 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Comparative Example 2

A poly(amic acid) slurry for optical fibers has a viscosity of 10145 cp and a solid content of 19%.

A preparation method for the poly(amic acid) slurry for optical fibers comprises: N,N-dimethylacetamide (DMAc, 640 g) was added to the a 1 L reaction kettle, and then 4,4'-diaminodiphenyl ether (ODA, 61.32 g, 0.3 mol) was added to the reaction kettle, and the reaction kettle was heated to 40 °C, added with 3,3',4,4'-benzophenone tetracarboxylic dianhydride (BTDA, 98.67 g, 0.3 mol), and reacted at 40 °C for 10 h, and finally the system temperature was reduced to room temperature, and γ-aminopropyl triethoxysilane (0.8 g) was added and stirred for 2 h to obtain the poly(amic acid) slurry for optical fibers.

### Comparative Example 3

This comparative example provides a poly(amic acid) slurry for optical fibers, which differs from Example 1 in that γ-aminopropyl triethoxysilane was not added for stirring, and other substances, usage amounts, and preparation methods are the same as those in Example 1.

### Performance Test

(1) Tensile strength and elongation at break: firstly, the poly(amic acid) slurry for optical fibers was subjected to high-temperature imidization to obtain a polyimide film sample, wherein the conditions for the high-temperature imidization were: heating at a heating rate of 5 °C/min in a range of 60-400 °C for 8 h; and
   the polyimide film sample aforementioned was tested according to JISK7127, and the test conditions were: the tensile test was performed with the electromechanical universal testing machine (manufactured by INSTRON) at a test speed of 5 m/min, and a load cell of 5 kN and 0.05 N.
(2) Adhesive force: referred to ASTM D3359-09, the adhesive force of the polyimide film formed by coating the poly(amic acid) slurry on the glass surface was measured by a tape.
(3) Tg: the poly(amic acid) slurry was first subjected to high-temperature imidization to obtain a polyimide resin film; wherein the conditions of the high-temperature imidization were: heating at a heating rate of 5 °C/min in a range of 60-400 °C for 8 h; and
   then the polyimide resin film was tested using a scanning differential thermal analyzer (TA Instrument, Model Q200).
(4) Chemical strippability: firstly, the poly(amic acid) slurry for optical fibers was subjected to high-temperature imidization to obtain a polyimide film with a thickness of 25 µm; wherein the conditions of the high-temperature imidization were: heating at a heating rate of 5 °C/min in a range of 60-400 °C for 8 h, and then cutting the above polyimide film into 5 × 5 mm film, soaking into concentrated sulfuric acid (with a concentration of 98%), and recording the dissolution time or dissolving-to-break time of the film.

The poly(amic acid) slurry for optical fibers provided by Examples 1-8 and Comparative Examples 1-3 was tested according to the above test methods, and the test results were shown in Table 1.

**Table 1**

| | Tensile strength /MPa | Elongation at break /% | Adhesive force | Tg/°C | Dissolution time /min |
|---|---|---|---|---|---|
| Example 1 | 168 | 67 | 5B | 389 | 3 |
| Example 2 | 158 | 60 | 5B | 391 | 3 |
| Example 3 | 164 | 61 | 5B | 396 | 5 |
| Example 4 | 146 | 59 | 5B | 387 | 3 |
| Example 5 | 151 | 67 | 5B | 381 | 3 |
| Example 6 | 156 | 66 | 5B | 394 | 4 |
| Example 7 | 179 | 76 | 5B | 371 | 2 |
| Example 8 | 188 | 89 | 5B | 266 | 0.5 |
| Comparative Example1 | 128 | 85 | 5B | 399 | Insoluble |
| Comparative Example2 | 131 | 64 | 5B | 280 | Insoluble |
| Comparative Example3 | 168 | 68 | 2B | 389 | 3 |

It can be seen from the data in Table 1 that the polyimide film which is formed by the poly(amic acid) slurry for optical fibers provided in the present application has excellent mechanical properties, adhesion properties, high-temperature resistance, and chemical strippability;
specifically, for the polyimide film formed by poly(amic acid) slurry for optical fibers provided in Examples 1-7, the tensile strength is as high as 146-179 MPa, the elongation at break is 59-76%, the adhesion is as high as 5 B, the Tg is 371-396 °C, and the dissolution time is only 2-4 min;
compared to Examples 1-7, the polyimide film which is formed by the poly(amic acid) slurry for optical fibers provided in Comparative Examples 1-2 is difficult to dissolve even by being soaked in sulfuric acid for 8 h, which shows almost no chemical strippability;
compared to Example 1, the adhesive force between the polyimide film which is formed by the poly(amic acid) slurry for optical fibers provided in Comparative Example 3 and the substrate is only 2 B, and the adhesion performance is poor, which is caused by the absence of the coupling agent; and
compared to Example 1, the high-temperature resistance of the polyimide film which is formed by the poly(amic acid) slurry for optical fibers provided in the Example 8 also decreases, because of the overly low molar ratio of pyromellitic dianhydride and phenylene bis(trimellitate anhydride) (the ester functional monomer).

The applicant declares that the present application illustrates a poly(amic acid) slurry for optical fibers, a preparation method therefor, and an application thereof by the above examples, but the present application is not limited to the above examples, which means that the present application is not necessarily rely on the above examples to be implemented. Those skilled in the art should understand that any improvements of the present application, equivalent substitution of each raw material of the product of the present application and the addition of auxiliary components, and selection of specific methods all fall within the scope of protection and disclosure of the present application.

## Claims

1. A poly(amic acid) slurry for optical fibers, wherein raw materials for preparing the poly(amic acid) slurry for optical fibers comprise aromatic diamine, aromatic dianhydride, an ester functional monomer, an organic solvent, and a coupling agent;
the ester functional monomer comprises an ester containing two amino groups and/or an ester containing two anhydride groups.

2. The poly(amic acid) slurry for optical fibers according to claim 1, wherein in the raw materials for preparing the poly(amic acid) slurry for optical fibers, a mass percentage content of the aromatic diamine and the aromatic dianhydride is 18-32%, and preferably, 19-30%;
preferably, in the raw materials for preparing the poly(amic acid) slurry for optical fibers, a molar ratio of anhydride groups to amino groups is 1:(0.95-1.05);
preferably, the aromatic diamine comprises any one or a combination of at least two of p-phenylenediamine, m-phenylenediamine, 4,4'-diaminodiphenyl ether, 2,2'-bis(trifluoromethyl) diaminobiphenyl, 4,4'-diaminobenzanilide, 2,2'-bis[4-(4-aminophenoxyphenyl)]propane, 4,4'-diaminodiphenylsulfone, 2-(4-aminophenyl)-5-aminobenzimidazole, 2,2-bis(4-hydroxy-3-aminophenyl)propane, 4,4'-bis(3-aminophenoxy)diphenylsulfone, 4,4'-diamino-2,2'-dimethyl-1,1'-biphenyl, 4,4'-diamino-biphenyl, or 9,9-bis(4-aminophenyl)fluorene;
preferably, the aromatic dianhydride comprises aromatic tetracarboxylic acid dianhydride;
preferably, the aromatic tetracarboxylic acid dianhydride comprises any one or a combination of at least two of 2,2',3,3'-biphenyl tetracarboxylic dianhydride, 3,3',4,4'-biphenyl tetracarboxylic dianhydride, 4,4'-oxydiphthalic anhydride, 9,9-bis(3,4-dicarboxyphenyl)fluorene dianhydride, 1,3-dioxo-1,3-dihydroisobenzofuran-5-yl 1,3-dioxo-1,3-dihydroisobenzofuran-5-carboxylate, bis[(3,4-dicarboxylic anhydride)phenyl] terephthalate, 3,3',4,4'-diphenylsulfone tetracarboxylic dianhydride, 1,4-phenylene bis(1,3-dioxo-1,3-dihydroisobenzofuran-5-carboxylate), 4,4'-(p-phenylenedioxy)bis(phthalic anhydride), pyromellitic dianhydride, 2,2-bis(3,4-dicarboxyphenyl)hexafluoropropane dianhydride, 2,2-bis(4-(3,4- dicarboxyphenoxy) phenyl)hexafluoropropane dianhydride, 2,2-bis(4-(3,4-dicarboxybenzoyloxy)phenyl) hexafluoropropane dianhydride, or 2,2'-bis(trifluoromethyl)-4,4'-bis(3,4-dicarboxy phenoxy)diphenyl dianhydride.

3. The poly(amic acid) slurry for optical fibers according to claim 1 or 2, wherein the ester functional monomer comprises an ester containing two amino groups, and a molar ratio of the ester containing two amino groups to the aromatic diamine is 1:(1-10);
preferably, the ester containing two amino groups has at least one of the following structures: 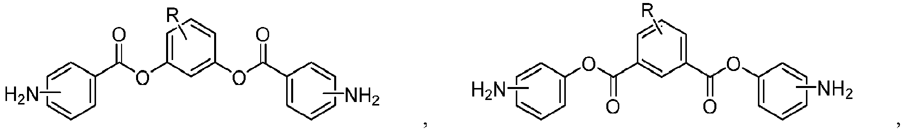 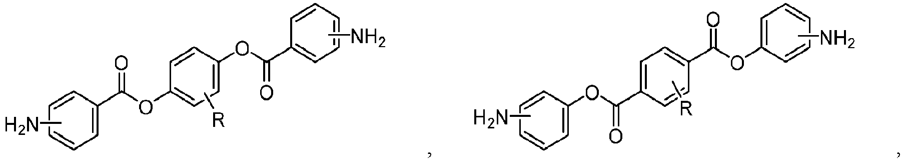 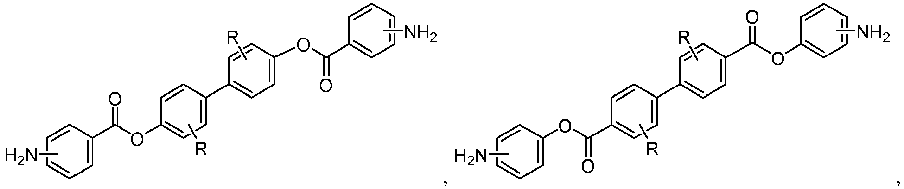 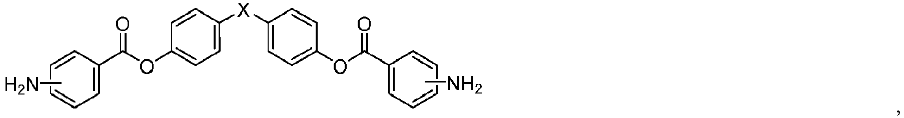 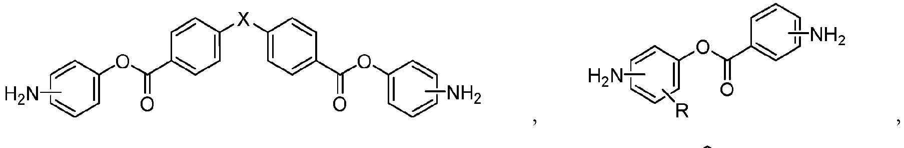 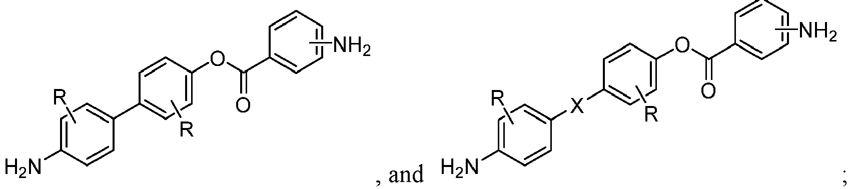
in the above structures, R is independently selected from any one of H, methyl, ethyl, or -CF₃, and X is independently selected from any one of -O-, -S-, or -SO₂-;
preferably, the ester containing two amino groups comprises any one or a combination of at least two of [4-(4-aminobenzoyl)oxyphenyl] 4-aminobenzoate, bis(4-aminophenyl) terephthalate, or 4-aminophenyl-4-aminobenzoate;
preferably, the ester functional monomer comprises an ester containing two anhydride groups, and a molar ratio of the ester containing two anhydride groups to the aromatic dianhydride is 1:(1-10);
preferably, the ester containing two anhydride groups has at least one of the following structures: 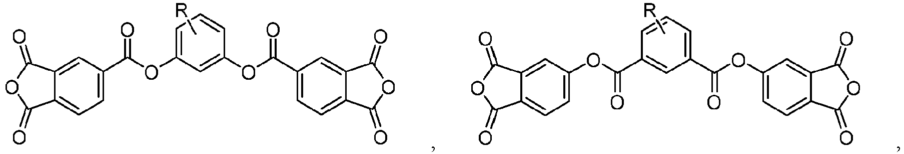 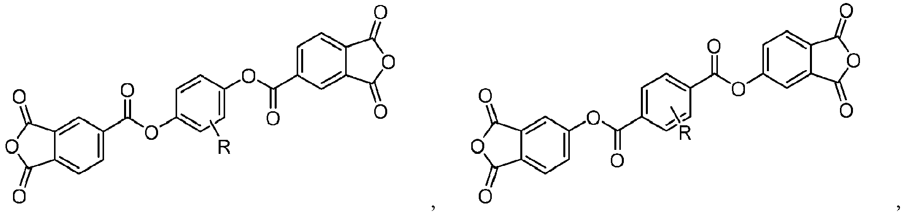 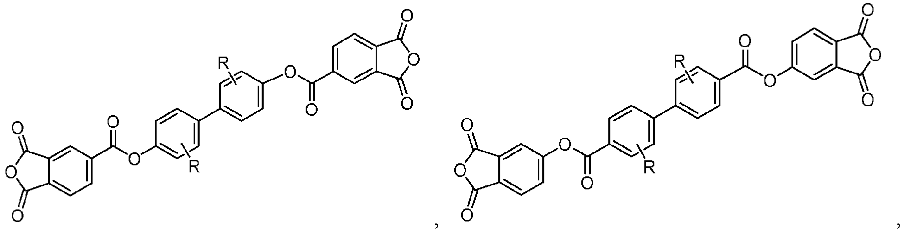 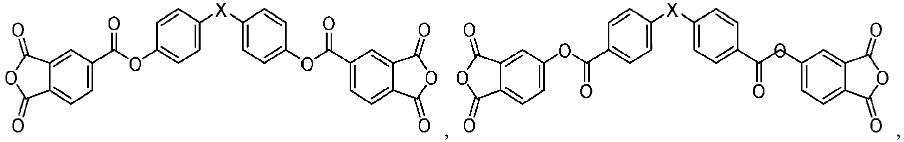 and 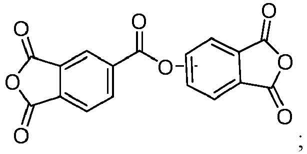
in the above structures, R is independently selected from any one of H, methyl, ethyl, or -CF₃, and X is independently selected from any one of -O-, -S-, - SO₂-, or methylene;
preferably, the ester containing two anhydride groups comprises any one or a combination of at least two of phenylene bis(trimellitate anhydride), bis[(3,4-dicarboxylic anhydride)phenyl] terephthalate, or 1,3-dioxo-1,3-dihydroisobenzofuran-5-yl 1,3-dioxo-1,3-dihydroisobenzo furan-5-carboxylate.

4. The poly(amic acid) slurry according to any one of claims 1-3, wherein the organic solvent comprises an aprotic organic solvent, which is preferably any one or a combination of at least two of N-methyl-2-pyrrolidone, N,N-dimethylformamide, N,N-dimethylacetamide, γ-butyrolactone, propylene glycol monomethyl ether, cyclopentanone, cyclohexanone, ethyl acetate, toluene, or methyl ethyl ketone, and further preferably, N,N-dimethylformamide and N,N-dimethylacetamide;
preferably, the coupling agent comprises a silane coupling agent.

5. The poly(amic acid) slurry for optical fibers according to any one of claims 1-4, wherein the raw materials for preparing the poly(amic acid) slurry for optical fibers also comprise an end-capping agent;
preferably, the end-capping agent comprises a monoamine compound or a monocarboxylic acid compound.

6. The poly(amic acid) slurry for optical fibers according to any one of claims 1-5, wherein a viscosity of the poly(amic acid) slurry for optical fibers is 3000-30000 cp, and preferably, 5000-15000 cp.

7. A preparation method for the poly(amic acid) slurry for optical fibers according to any one of claims 1-6, which comprises: subjecting aromatic diamine, aromatic dianhydride, and an ester functional monomer to a polymerization reaction in an organic solvent, and adding a coupling agent and mixing to obtain the poly(amic acid) slurry for optical fibers.

8. The preparation method according to claim 7, wherein the polymerization reaction is performed at a temperature of 25-60 °C, and preferably, 35-55 °C;
preferably, the polymerization reaction is performed for a period of 3-24 h;
preferably, after the polymerization reaction is finished, the preparation method also comprises adding an end-capping agent for an end-capping reaction.

9. A polyimide film, which is obtained by subjecting the poly(amic acid) slurry for optical fibers according to any one of claims 1-6 to an imidization reaction;
preferably, the imidization reaction is performed at a temperature of 60-400 °C.

10. A polyimide optical fiber, which comprises a bare optical fiber and the polyimide film according to claim 9 that is coated around the bare optical fiber.
